# EUROPEAN PATENT APPLICATION

(11) **EP 4 349 784 A1**
(43) Date of publication of application: **10.04.2024**
(21) Application number: 22832909.0
(22) Date of filing: 20.06.2022
(51) Int. Cl.: C01G 23/04

(54) **POWDER AND DISPERSION**

(30) Priority: 01.07.2021 JP 2021110079
(71) Applicant: Denka Company Limited, Tokyo 103-8338 (JP)
(72) Inventor: KOBAYASHI Takuji, Tokyo 103-8338 (JP); FUKAZAWA Motoharu, Tokyo 103-8338 (JP); OKABE Takuto, Tokyo 103-8338 (JP)
(74) Representative: Mewburn Ellis LLP
(86) International application number: PCT/JP2022/024574
(87) International publication number: WO 2023/276761

(57) **Abstract**

A powder containing: a first particle having a first crystal composition; and a second particle having a second crystal composition different from the first crystal composition, wherein each of the first crystal composition and the second crystal composition contains at least one selected from the group consisting of Ti₂O₃, γ-Ti₃O₅ and Ti₄O₇.

## Description

### Technical Field

The present disclosure relates to a powder and a dispersion containing particle having a particular low-order titanium oxide crystal composition.

### Background Art

It is known that a low-order titanium oxide (also referred to as reduced titanium oxide) obtained by reducing titanium dioxide shows different colors depending on the ratio of titanium and oxygen which are constituent elements, and becomes black by appropriately adjusting the ratio. Therefore, particle whose surfaces are composed of a low-order titanium oxide can be used in various applications as a pigment such as a black pigment. For example, Patent Document 1 discloses a cosmetic using a pigment exhibiting dichroism in which the color tone of the appearance color and the interference color are different from each other by forming a single layer of low-order titanium oxide on plate-like particle. In addition, Patent Document 2 discloses a black titanium dioxide powder produced using CaH₂ as a reducing agent for use as a black pigment or the like. Patent Document 3 discloses titanium oxynitride powder produced by reacting titanium oxide with high-temperature ammonia gas.

### Citation List

### Patent Documents

Patent Document 1: Japanese Patent Application Publication No. 2010-280607
Patent Document 2: Japanese Patent Application Publication No. 2012-214348
Patent Document 3: Japanese Patent Application Publication No. 2010-30842

### Summary of Invention

### Technical Problem

The black pigment containing the low-order titanium oxide exhibits black colors of different color tones, such as a reddish black color and a bluish black color, even if it is said to be entirely black color. In addition, depending on the color tone, even the same blackness may appear bright or dark. For example, a darker color tone such as blue or green appears more black than a bright color tone such as red or yellow, even if they have the same blackness. Therefore, it is preferable that the degree of freedom in adjusting the color tone is high so that the color tone of the black pigment can be selected according to the use of the black pigment or the like.

Accordingly, an object of one aspect of the present invention is to provide a low-order titanium oxide powder capable of suitably adjusting the color tone.

### Solution to Problem

As described above, the present inventors have found that the color tone can be suitably adjusted by combining the first particle and the second particle each having a crystal composition of Ti₂O₃, γ-Ti₃O₅ or Ti₄O₇ and different from each other. In particular, with respect to the L* value in the L*a*b* color space, which is an index for evaluating color tone, it has been surprisingly found that the L* value of the powder containing the first particle and the second particle can be lower than the L* value of the first particle itself and the L* value of the second particle itself.

The present invention includes the following aspects.
[1] A powder containing: a first particle having a first crystal composition; and a second particle having a second crystal composition different from the first crystal composition, wherein each of the first crystal composition and the second crystal composition contains at least one selected from the group consisting of Ti₂O₃, γ-Ti₃O₅ and Ti₄O₇.
[2] The powder according to [1], wherein the first crystal composition contains Ti₂O₃, and the second crystal composition contains γ-Ti₃O₅.
[3] The powder according to [1], wherein the first crystal composition comprises Ti₂O₃, and the second crystal composition comprises Ti₄O₇.
[4] The powder according to [1], wherein the first crystal composition contains γ-Ti₃O₅, and the second crystal composition contains Ti₄O₇.
[5] The powder according to any one of [1] to [4], further containing a third particle having a third crystal composition different from the first crystal composition and the second crystal composition, and containing at least one selected from the group consisting of Ti₂O₃, γ-Ti₃O₅ and Ti₄O₇.
[6] A dispersion containing: the powder according to any one of [1] to [5]; and a dispersion medium.

### Advantageous Effects of Invention

According to one aspect of the present invention, it is possible to provide a low-order titanium oxide powder capable of suitably adjusting the color tone.

### Brief Description of Drawings

FIG. 1 shows measurement results of X-ray diffraction of low-order titanium oxide powders in examples.
FIG. 2 shows measurement results of X-ray diffraction of low-order titanium oxide powders in examples.

### Description of Embodiments

An embodiment of the present invention is a powder containing a first particle having a first crystal composition and a second particle having a second crystal composition that is different from the first crystal composition.

The first crystal composition contains at least one selected from the group consisting of Ti₂O₃, γ-Ti₃O₅ and Ti₄O₇ (hereinafter, collectively referred to as "low-order titanium oxide"). In an embodiment, the first crystal composition may contain only one selected from the group consisting of Ti₂O₃, γ-Ti₃O₅ and Ti₄O₇. In another embodiment, the first crystal composition may contain two or more selected from the group, may contain Ti₂O₃ and γ-Ti₃O₅, and may contain γ-Ti₃O₅ and Ti₄O₇.

The second crystal composition contains at least one selected from the group consisting of Ti₂O₃, γ-Ti₃O₅ and Ti₄O₇. In an embodiment, the second crystal composition may contain only one selected from the group consisting of Ti₂O₃, γ-Ti₃O₅ and Ti₄O₇. In another embodiment, the second crystal composition may contain two or more selected from the group, may contain Ti₂O₃ and γ-Ti₃O₅, and may contain γ-Ti₃O₅ and Ti₄O₇.

It is noted that the second crystal composition different from the first crystal composition means that the second crystal composition is not completely identical to the first crystal composition. For example, if the first crystal composition is Ti₂O₃ and γ-Ti₃O₅ and the second crystal composition is γ-Ti₃O₅ and Ti₄O₇, then the second crystal composition is different from the first crystal composition. In other words, if the second crystal composition is not completely identical to the first crystal composition, the second crystal composition may have a partially common crystal structure (γ-Ti₃O₅ in the above example) to the first crystal composition.

It is confirmed that the first particle and the second particle (and third particle described later) have the first crystal composition and the second crystal composition (third crystal composition described later) respectively by measuring the powder by an X-ray diffraction method (XRD) and observing only a diffraction peak caused by at least one selected from the group consisting of Ti₂O₃, γ-Ti₃O₅ and Ti₄O₇.

Examples of the combination of the first crystal composition and the second crystal composition include the following combinations.
(1) The first crystal composition contains Ti₂O₃ and the second crystal composition contains γ-Ti₃O₅.
(2) The first crystal composition contains Ti₂O₃ and the second crystal composition contains Ti₄O₇.
(3) The first crystal composition contains γ-Ti₃O₅ and the second crystal composition contains Ti₄O₇.

In these combinations (1) to (3), each of the first crystal composition and the second crystal composition may contain only one of each low-order titanium oxide described above, or may further contain another low-order titanium oxide in addition to each low-order titanium oxide described above.

The low-order titanium oxide powder may further contain a third particle having a third crystal composition different from the first crystal composition and the second crystal composition. The third crystal composition contains at least one crystal composition selected from the group consisting of Ti₂O₃, γ-Ti₃O₅ and Ti₄O₇.

The third crystal composition includes at least one crystal composition selected from the group consisting of Ti₂O₃, γ-Ti₃O₅ and Ti₄O₇. In an embodiment, the third crystal composition may contain only one crystal composition selected from the group consisting of Ti₂O₃, γ-Ti₃O₅ and Ti₄O₇. In another embodiment, the third crystal composition may contain two or more crystal compositions selected from the group, may contain Ti₂O₃ and γ-Ti₃O₅, and may contain γ-Ti₃O₅ and Ti₄O₇.

It is noted that the third crystal composition different from the first crystal composition and the second crystal composition means that the third crystal composition is not completely identical to each of the first crystal composition and the second crystal composition. For example, if the first crystal composition is Ti₂O₃ and γ-Ti₃O₅, the second crystal composition is γ-Ti₃O₅ and Ti₄O₇, and the third crystal composition is γ-Ti₃O₅, the third crystal composition is different from the first crystal composition and the second crystal composition. In other words, if the third crystal composition is not completely identical to each of the first crystal composition and the second crystal composition, the third crystal composition may have a common crystal structure (γ-Ti₃O₅ in the above example) to each of the first crystal composition and the second crystal composition.

When the low-order titanium oxide powder further contains the third particle, for example, the first crystal composition may contain Ti₂O₃, the second crystal composition may contain γ-Ti₃O₅, and the third crystal composition may contain Ti₄O₇. In this case, each of the first crystal composition, the second crystal composition, and the third crystal composition may contain only one of each low-order titanium oxide described above, or may further contain another low-order titanium oxide in addition to the low-order titanium oxide described above.

The BET specific surface area of each of the first particles, the second particles, and the third particles may be 0.25 m²/g or more, 1 m²/g or more, 2 m²/g or more, 3 m²/g or more, or 4 m²/g or more, and may be 20 m²/g or less, 10 m²/g or less, or 8 m²/g or less. The BET specific surface area of the low-order titanium oxide powder may also be within the above range. The BET specific surface area is measured by nitrogen gas adsorption at an equilibrium relative pressure of about 0.3 using a specific surface area measuring device (for example, Macsorb HM model-1201, manufactured by Mountech Co., Ltd.), and is obtained as an average value of n=2. The degassing is performed at 200°C for 10 minutes by a nitrogen gas flow (atmospheric pressure).

The content of impurities in each of the first particles, the second particles, and the third particles (and further in the low-order titanium oxide powder) is preferably as small as possible. The content of Al in each of the particles may be preferably 200 ppm by mass or less, 50 ppm by mass or less, or 20 ppm by mass or less. The content of B in each of the particles may be preferably 50 ppm by mass or less, 30 ppm by mass or less, or 10 ppm by mass or less. The content of Ba in each of the particles may be preferably 50 ppm by mass or less, 10 ppm by mass or less, or 5 ppm by mass or less. The content of Ca in each of the particles may be preferably 100 ppm by mass or less, 50 ppm by mass or less, or 10 ppm by mass or less. The content of Cd in each of the particles may be preferably 10 ppm by mass or less, 5 ppm by mass or less, or 2 ppm by mass or less. The content of Co in each of the particles may be preferably 10 ppm by mass or less, 5 ppm by mass or less, or 2 ppm by mass or less. The content of Cr in each of the particles may be preferably 100 ppm by mass or less, 10 ppm by mass or less, or 5 ppm by mass or less. The content of Cu in each of the particles may be preferably 200 ppm by mass or less, 50 ppm by mass or less, or 10 ppm by mass or less. The content of Fe in each of the particles may be preferably 200 ppm by mass or less, 50 ppm by mass or less, or 10 ppm by mass or less. The content of K in each of the particles may be preferably 100 ppm by mass or less, 5 ppm by mass or less, or 1 ppm by mass or less. The content of Li in each of the particles may be preferably 20 ppm by mass or less, 2 ppm by mass or less, or 0.5 ppm by mass or less.

The content of Mg in each of the particles may be preferably 100 ppm by mass or less, 10 ppm by mass or less, or 1 ppm by mass or less. The content of Mn in each of the particles may be preferably 10 ppm by mass or less, 5 ppm by mass or less, or 2 ppm by mass or less. The content of Mo in each of the particles may be preferably 10 ppm by mass or less, 5 ppm by mass or less, or 2 ppm by mass or less. The content of Na in each of the particles may be preferably 50 ppm by mass or less, 10 ppm by mass or less, 5 ppm by mass or less, or 2 ppm by mass or less. The content of Ni in each of the particles may be preferably 50 ppm by mass or less, 20 ppm by mass or less, or 10 ppm by mass or less. The content of P in each of the particles may be preferably 200 ppm by mass or less, 30 ppm by mass or less, 10 ppm by mass or less, or 5 ppm by mass or less. The content of Pb in each of the particles may be preferably 50 ppm by mass or less, 5 ppm by mass or less, or 2 ppm by mass or less. The content of Sb in each of the particles may be preferably 100 ppm by mass or less, 20 ppm by mass or less, 10 ppm by mass or less, or 2 ppm by mass or less. The content of Si in each of the particles may be preferably 1000 ppm by mass or less, 100 ppm by mass or less, 30 ppm by mass or less, 20 ppm by mass or less, or 2 ppm by mass or less. The content of Zn in each of the particles may be preferably 100 ppm by mass or less, 10 ppm by mass or less, or 2 ppm by mass or less. The content of Zr in each of the particles may be preferably 100 ppm by mass or less, 20 ppm by mass or less, or 2 ppm by mass or less.

The total content of Na, K and P in each of the particles may be preferably 2000 ppm by mass or less, 1000 ppm by mass or less, 500 ppm by mass or less, or 100 ppm by mass or less. The total content of Pb, Cd and Cr in each of the particles may be preferably 200 ppm by mass or less, 100 ppm by mass or less, 50 ppm by mass or less, or 30 ppm by mass or less.

The content of each impurity in the low-order titanium oxide powder may also be within the range described above. The content of impurities is measured by Agilent5110 ICP-OES (manufactured by Agilent Technology Co., Ltd.) using a liquid obtained by pressurizing and acid decomposing (150°C, 4 hours) 0.1 g of the sample with 1 mL addition of each of HF and HCl.

The contents of the first particle, the second particle, and the third particle in the low-order titanium oxide powder are appropriately adjusted according to the desired color tone. The content of each of the first particle, the second particle, and the third particle may be, for example, 5% by mass or more, 20% by mass or more, 30% by mass or more, 40% by mass or more, 50% by mass or more, 60% by mass or more, 70% by mass or more, 80% by mass or more, or 95% by mass or more, and may be 95% by mass or less, 80% by mass or less, 70% by mass or less, 60% by mass or less, 50% by mass or less, 40% by mass or less, 30% by mass or less, 20% by mass or less, or 5% by mass or less, based on the total amount of the low-order titanium oxide powder.

The low-order titanium oxide powder exhibits a black color having a specific chromaticity by containing the above particles. The L* value of the low-order titanium oxide powder in the L*a*b* color space is preferably 13.0 or less, more preferably 12.0 or less, and even more preferably 11.0 or less, and may be, for example, 4.0 or more, 5.0 or more, or 6.0 or more. The a* value of the low-order titanium oxide powder in the L*a*b* color space is preferably -3.0 or more, more preferably -2.0 or more, and is preferably 8.0 or less, more preferably 6.0 or less, still more preferably 4.0 or less. The b* value in the L*a*b* color space of the low-order titanium oxide powder is preferably -8.0 or more, more preferably -6.0 or more, and even more preferably -4.0 or more, and is preferably 1.0 or less, and more preferably 0.0 or less.

The L* value, the a* value, and the b* value in the L*a*b* color space are measured by a colorimetric color difference meter (for example, ZE-2000 (manufactured by Nippon Denshoku Industries Co., Ltd.)). More specifically, after zero point correction is performed with a cylinder for dark field, standard matching is performed with a standard white plate (X=91.71, Y=93.56, Z=110.52). Next, about 3 g of the low-order titanium oxide powder are put into a round cell of 35ϕ×15H, and measurement is performed.

The above-described low-order titanium oxide powder is obtained by, for example, mixing the first particles and the second particles (and, if necessary, the third particles). The mixing may be either dry mixing or wet mixing, and is preferably dry mixing from the viewpoint that the production cost at the time of mixing can be reduced because the solvent does not need to be dried due to no use of solvent. Examples of the mixing method include mixing with a pulverizer such as an agate mortar, a ball mill, or a vibration mill, and various mixers.

The above-described low-order titanium oxide particles are suitably used as a pigment (colored filler) such as a black pigment. Such a pigment (colored filler) is suitably used as a coloring agent including, for example, cosmetics, electronic components such as semiconductors, and paints such as paints and inks.

When the low-order titanium oxide powder is used in the above-described application, the low-order titanium oxide powder is used by being dispersed in a dispersion medium, for example. That is, another embodiment of the present invention is a dispersion containing the above-described low-order titanium oxide powder and a dispersion medium dispersing the low-order titanium oxide powder.

The dispersion medium is appropriately selected depending on the application of the dispersion, and may be, for example, water, an alcohol, a ketone, an ester, a resin, or the like. Examples of the resin include an epoxy resin, a silicone resin, a phenol resin, a melamine resin, an urea resin, an unsaturated polyester, a fluororesin, a polyimide, a polyamideimide, a polyetherimide, a polybutylene terephthalate, a polyethylene terephthalate, a polyphenylene sulfide, a wholly aromatic polyester, a polysulfone, a liquid crystal polymer, a polyethersulfone, a polycarbonate, a maleimide-modified resin, an ABS (acrylonitrile butadiene styrene) resin, an AAS (acrylonitrile acrylic rubber styrene) resin, an AES (acrylonitrile ethylene propylene diene rubber styrene) resin, and the like.

The content of the low-order titanium oxide powder in the dispersion is appropriately selected depending on the application of the dispersion, and, for example, may be 5% by mass or more and may be 90% by mass or less, based on the total amount of the dispersion. The content of the dispersion medium in the dispersion is appropriately selected depending on the application of the dispersion, and, for example, may be 10% by mass or more and may be 95% by mass or less, based on the total amount of the dispersion.

### Examples

Hereinafter, the present invention will be described in more detail based on examples, but the present invention is not limited to the following examples.

### <Preparation of Ti₂O₃ particles>

A powder of TiO₂ (manufactured by Toho Titanium, HT0514: purelity of 99.9%) and a powder of TiH₂ (manufactured by Tohotech, TCH450: purelity of 99.8%) were mixed in an Eirich mixer (manufactured by Nippon Eirich Co., Ltd.) so that the molar ratio of TiO₂/TiH₂ was 3.0/1 to obtain a mixture. This mixture was transferred to an alumina crucible and heated for 12 hours in an electric furnace (HIMULTI 10000 manufactured by Fuji Electric Wave Industry Co., Ltd.) in a state in which the temperature was raised to 900°C at 10 °C/min in an Ar atmosphere. After heating, the obtained powder was pulverized in a mortar for 5 minutes to obtain particles having a crystal composition containing only one type of Ti₂O₃ (Ti₂O₃ particles).

### <Production of γ-Ti₃O₅ particles>

A powder of TiO₂ (manufactured by Toho Titanium, HT0514: purelity of 99.9%) and a powder of TiH₂ (manufactured by Tohotech, TCH450: purelity of 99.8%) were mixed in an Eirich mixer (manufactured by Nippon Eirich Co., Ltd.) so that the molar ratio of TiO₂/TiH₂ was 4.8/1 to obtain a mixture. This mixture was transferred to an alumina crucible and heated for 12 hours in an electric furnace (HIMULTI 10000 manufactured by Fuji Electric Wave Industry Co., Ltd.) in a state in which the temperature was raised to 900°C at 10 °C/min in an Ar atmosphere. After heating, the obtained powder was pulverized in a mortar for 5 minutes to obtain particles having a crystal composition containing only one type of γ-Ti₃O₅ (γ-Ti₃O₅ particles).

### <Preparation of Ti₄O₇ particles>

A powder of TiO₂ (manufactured by Toho Titanium, HT0514: purelity of 99.9%) and a powder of TiH₂ (manufactured by Tohotech, TCH450: purelity of 99.8%) were mixed in an Eirich mixer (manufactured by Nippon Eirich Co., Ltd.) so that the molar ratio of TiO₂/TiH₂ was 7.0/1 to obtain a mixture. This mixture was transferred to an alumina crucible and heated for 12 hours in an electric furnace (HIMULTI 10000 manufactured by Fuji Electric Wave Industry Co., Ltd.) in a state in which the temperature was raised to 900°C at 10 °C/min in an Ar atmosphere. After heating, the obtained powder was pulverized in a mortar for 5 minutes to obtain particles having a crystal composition containing only one type of Ti₄O₇ (Ti₄O₇ particles).

### <Preparation of low-order titanium oxide powders>

The Ti₂O₃ particles, γ-Ti₃O₅ particles, and Ti₄O₇ particles obtained above were weighed and placed in a plastic vessel so as to have the proportions (% by mass) shown in Table 1, and mixed for 3 minutes under the conditions of output 60 G using a low-frequency resonant acoustic mixer LabRAMII (manufactured by Resodyn Acoustic Mixers, Inc) to obtain low-order titanium oxide powders Nos. 1 to 13.

### <X-ray diffraction measurement>

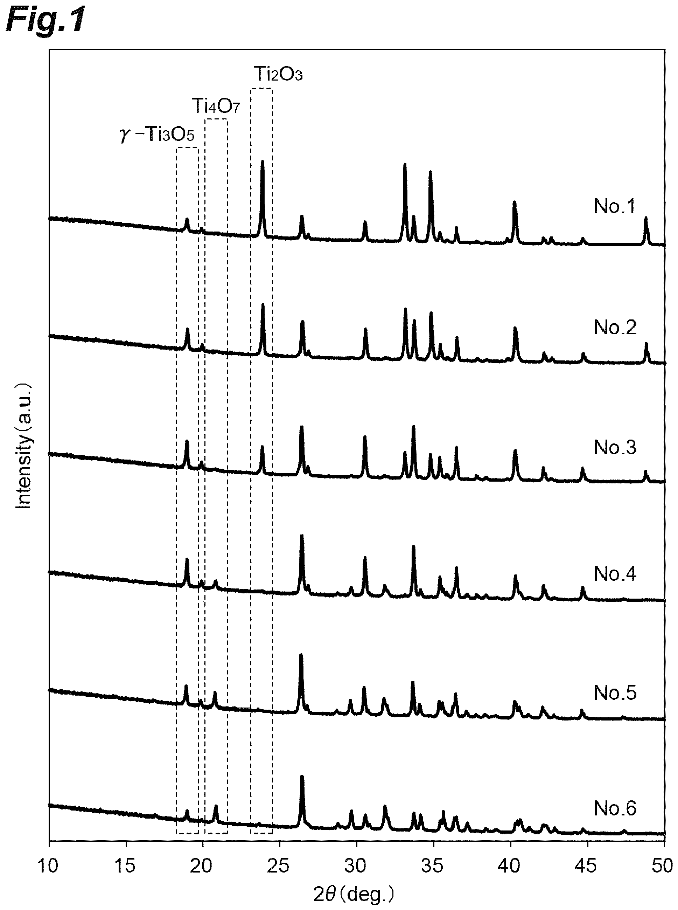

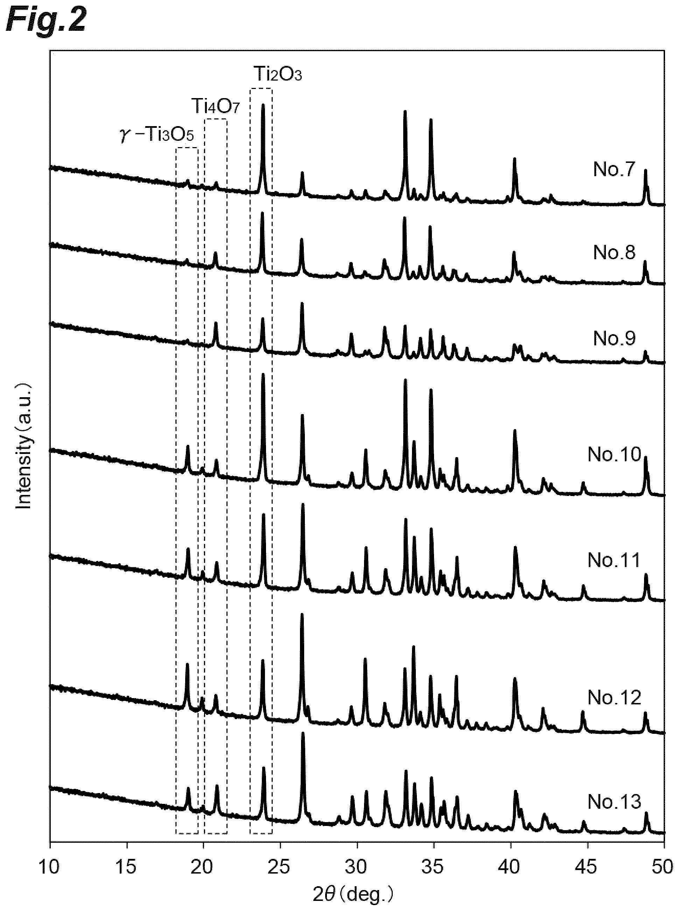

Each of the low-order titanium oxide powders was subjected to powder X-ray diffraction measurement. Specifically, a horizontal sample multipurpose X-ray diffractometer (RINT-UltimaIV manufactured by Rigaku Corporation) was used to measure a diffraction pattern under the following measurement conditions. The obtained X-ray diffraction patterns are shown in FIGs. 1 and 2.

### (Measurement Conditions)

X-ray source: Cu-K α radiation (λ = 1.54184 Å)
Tube voltage: 40kV, tube current: 40 mA
Optical conditions for measurement: divergence slit = 2/3°
Scattering slit: 8 mm
Light-receiving slit = 0. 15 mm
Position of diffraction peak = 2θ (diffraction angle)
Scan speed: 4.0° (2θ)/min, continuous scan
Measurement range: 2θ = 10° to 80°

### <Measurement of chromaticity>

The chromaticities (L*value, a*value, and b*value in the L*a*b* color space) of the Ti₂O₃ particles, the γ-Ti₃O₅ particles, the Ti₄O₇ particles, and each of the low-order titanium oxide powders were measured using a colorimetric color difference meter ZE-2000 (manufactured by Nippon Denshoku Industries Co., Ltd.). More specifically, first, zero point correction was performed with a cylinder for dark field, and then standard matching was performed with a standard white plate (X=91.71, Y=93.56, Z=110.52). Next, 3 g of the particles were put into a round cell of 35ϕ×15H, and the chromaticity was measured. The results are shown in Table 1.

### <Measurement of BET specific surface area>

The BET specific surfaces of the Ti₂O₃ particles, γ-Ti₃O₅ particles, Ti₄O₇ particles, and each of the low-order titanium oxide powders were measured by nitrogen-gas adsorption at an equilibrated relative pressure of about 0.3 using a specific surface area measuring device (Macsorb HM model-1201, manufactured by Mountech Co., Ltd.), and averaged for n=2. Degassing was carried out by nitrogen gas flow (atmospheric pressure) at 200°C for 10 minutes. The results are shown in Table 1.

**[Table 1]**

| | | Proportion (% by mass) | | | Chromaticity | | | BET specific surface area (m²/g) |
|---|---|---|---|---|---|---|---|---|
| | | Ti₂O₃ | γ-Ti₃O₅ | Ti₄O₇ | L* | a* | b* | |
| Ti₂O₃ particles | | 100 | - | - | 11.2 | 3.5 | 0.0 | 4.21 |
| γ-Ti₃O₅ particles | | - | 100 | - | 10.8 | 0.4 | -2.1 | 3.56 |
| Ti₄O₇ particles | | - | - | 100 | 13.2 | -1.5 | -4.3 | 3.21 |
| Low-order titanium oxide powder No. | 1 | 75 | 25 | - | 10.1 | 2.5 | -0.6 | 2.98 |
| | 2 | 50 | 50 | - | 10.0 | 1.9 | -1.0 | 3.45 |
| | 3 | 25 | 75 | - | 9.9 | 1.5 | -1.6 | 3.34 |
| | 4 | - | 75 | 25 | 9.8 | -0.1 | -2.6 | 3.21 |
| | 5 | - | 50 | 50 | 9.9 | -0.4 | -2.7 | 2.78 |
| | 6 | - | 25 | 75 | 10.4 | -0.6 | -3.0 | 3.12 |
| | 7 | 75 | - | 25 | 10.3 | 2.5 | -0.6 | 2.75 |
| | 8 | 50 | - | 50 | 10.4 | 1.3 | -1.4 | 3.68 |
| | 9 | 25 | - | 75 | 10.6 | 0.4 | -2.2 | 3.12 |
| | 10 | 50 | 25 | 25 | 10.1 | 1.6 | -1.2 | 3.45 |
| | 11 | 33.3 | 33.3 | 33.3 | 10.2 | 1.0 | -1.6 | 4.11 |
| | 12 | 25 | 50 | 25 | 10.4 | 0.8 | -1.8 | 3.18 |
| | 13 | 25 | 25 | 50 | 10.7 | 0.6 | -2.0 | 2.91 |

As can be seen from Table 1, the color tone can be suitably adjusted by combining the first particles and the second particles (and further the third particles) having a crystal composition of Ti₂O₃, γ-Ti₃O₅ or Ti₄O₇ and having different crystal compositions from each other. In particular, with respect to the L* value, surprisingly, the L* value of a powder containing the first particles and second particles can be lower than the L* value of the first particles themselves and the L* value of the second particles themselves. To be specific, for example, the L* values of the low-order titanium oxide powders 1 to 3 in which the Ti₂O₃ particles having the L* value of 11.2 and the γ-Ti₃O₅ particle haveing the L* value of 10.8 were mixed were expected to be between 10.8 and 11.2, but surprisingly, the L* values of the low-order titanium oxide powders 1 to 3 were lower than 10.8.

### <Elemental analysis>

The above Ti₂O₃ particles, γ-Ti₃O₅ particles, Ti₄O₇ particles, and each of the low-order titanium oxide powders were also subjected to elemental analysis using Agilent 5110ICP-OES (manufactured by Agilent Technologies, Inc.). To be specific, 0.1 g of the sample were weighed in a platinum crucible, 1 ml of each of HF and HCl were added thereto, and pressure acidolysis was performed at 150°C for 4 hours. Thereafter, the volume was fixed at 6 ml, and after confirming that there was no unnecessary residue, ICP emission spectral analysis was performed. The results are shown in Table 2. In Table 2, "ND" means that the value was equal to or less than the minimum limit of detection, and the numerical value in parentheses means that the value was equal to or less than the minimum limit of quantification. The minimum limit of detection and the minimum limit of quantification are as follows.

### (Minimum limit of detection)

Li, Na, Mg, K, and Ca: 0.5 pp, by mass
P: 5 ppm by mass
Elements other than the above: 2 ppm by mass
(Minimum limit of quantification)
Li, Na, Mg, K and Ca: 2 ppm by mass
P: 10 ppm by mass
Elements other than the above: 5 ppm by mass

**[Table 2]**

| | | Results of element analysis (ppm by mass) | | | | | | | | | | |
|---|---|---|---|---|---|---|---|---|---|---|---|---|
| | | Al | B | Ba | Ca | Cd | Co | Cr | Cu | Fe | K | Li |
| Ti₂O₃ particles | | 8.2 | ND | ND | ND | ND | ND | 5.2 | ND | 5.0 | ND | ND |
| γ-Ti₃O₅ particles | | 11.3 | ND | ND | ND | ND | ND | (3) | ND | ND | ND | ND |
| Ti₄O₇ particles | | 9.5 | ND | ND | ND | ND | ND | (3) | ND | ND | ND | ND |
| Low-order titanium oxide powder No. | 1 | 7.4 | ND | ND | ND | ND | ND | (4) | ND | ND | ND | ND |
| | 2 | 8.6 | ND | ND | ND | ND | ND | (3) | ND | ND | ND | ND |
| | 3 | 6.6 | ND | ND | ND | ND | ND | ND | ND | ND | ND | ND |
| | 4 | 6.0 | ND | ND | ND | ND | ND | ND | ND | ND | ND | ND |
| | 5 | 12.8 | ND | ND | ND | ND | ND | 5.7 | ND | 7.2 | ND | ND |
| | 6 | 7.3 | ND | ND | ND | ND | ND | ND | ND | ND | ND | ND |
| | 7 | 8.7 | ND | ND | ND | ND | ND | (3) | ND | ND | ND | ND |
| | 8 | 5.5 | ND | ND | ND | ND | ND | ND | ND | ND | ND | ND |
| | 9 | 11.0 | ND | ND | ND | ND | ND | (5) | ND | (5) | ND | ND |
| | 10 | 12.1 | ND | ND | ND | ND | ND | 5.4 | ND | 6.4 | ND | ND |
| | 11 | 11.5 | ND | ND | ND | ND | ND | 5.0 | ND | 6.0 | ND | ND |
| | 12 | 10.4 | ND | ND | ND | ND | ND | 13.4 | ND | 10.1 | 6.8 | ND |
| | 13 | 18.8 | (4) | ND | ND | ND | ND | 12.1 | ND | 15.0 | 11.8 | ND |

**[Table 2] (continuation)**

| | | Results of element analysis (ppm by mass) | | | | | | | | | | |
|---|---|---|---|---|---|---|---|---|---|---|---|---|
| | | Mg | Mn | Mo | Na | Ni | P | Pb | Sb | Si | V | Zn |
| Ti₂O₃ particles | | ND | ND | ND | (1.8) | 7.1 | ND | ND | ND | ND | ND | ND |
| γ-Ti₃O₅ particles | | ND | ND | ND | (1.1) | (5) | 13.9 | ND | ND | ND | ND | ND |
| Ti₄O₇ particles | | (1.1) | ND | ND | 10.0 | (4) | 110.0 | ND | ND | ND | ND | ND |
| Low-order titanium oxide powder No. | 1 | ND | ND | ND | (1.9) | (4) | ND | ND | ND | ND | ND | ND |
| | 2 | 2.1 | ND | ND | (0.8) | ND | ND | ND | ND | ND | ND | ND |
| | 3 | ND | ND | ND | 3.2 | ND | ND | ND | ND | ND | ND | ND |
| | 4 | ND | ND | ND | 3.6 | ND | (6) | ND | ND | ND | ND | ND |
| | 5 | ND | ND | ND | (1.0) | 8.1 | ND | ND | ND | ND | ND | ND |
| | 6 | ND | ND | ND | 2.8 | ND | ND | ND | ND | ND | ND | ND |
| | 7 | (0.5) | ND | ND | (0.7) | ND | ND | ND | ND | ND | ND | ND |
| | 8 | 4.1 | ND | ND | 2.2 | ND | (7) | ND | ND | ND | ND | ND |
| | 9 | ND | ND | ND | 3.4 | 7.0 | (6) | ND | ND | ND | ND | ND |
| | 10 | ND | ND | ND | 9.0 | 7.2 | (7) | ND | ND | ND | ND | ND |
| | 11 | ND | ND | ND | 6.2 | 7.1 | (6) | ND | ND | ND | ND | ND |
| | 12 | ND | ND | ND | 12.5 | 5.9 | ND | ND | ND | ND | ND | ND |
| | 13 | (0.7) | ND | ND | 10.4 | 6.0 | (6) | ND | ND | ND | ND | ND |

## Claims

1. A powder comprising:
a first particle having a first crystal composition; and
a second particle having a second crystal composition different from the first crystal composition,
wherein each of the first crystal composition and the second crystal composition comprises at least one selected from the group consisting of Ti₂O₃, γ-Ti₃O₅ and Ti₄O₇.

2. The powder according to claim 1, wherein the first crystal composition comprises Ti₂O₃, and the second crystal composition comprises γ-Ti₃O₅.

3. The powder according to claim 1, wherein the first crystal composition comprises Ti₂O₃, and the second crystal composition comprises Ti₄O₇.

4. The powder according to claim 1, wherein the first crystal composition comprises γ-Ti₃O₅, and the second crystal composition comprises Ti₄O₇.

5. The powder according to any one of claims 1 to 4, further comprising a third particle having a third crystal composition different from the first crystal composition and the second crystal composition, and comprising at least one selected from the group consisting of Ti₂O₃, γ-Ti₃O₅ and Ti₄O₇.

6. A dispersion comprising:
the powder according to any one of claims 1 to 4; and
a dispersion medium.
